# EUROPÄISCHE PATENTSCHRIFT

(11) **EP 2 696 062 B1**
(45) Veröffentlichungstag und Bekanntmachung des Hinweises auf die Patenterteilung: **16.05.2018**
(21) Anmeldenummer: 13179692.2
(22) Anmeldetag: 08.08.2013
(51) Int. Cl.: F28D 7/16, F28F 9/02, F28F 21/08, B21D 26/14, B21D 53/02, F01N 3/02, F02M 26/32

(54) **Wärmeübertrager**
Heat exchanger
Caloporteur

(30) Priorität: 09.08.2012 DE 102012214221
(43) Veröffentlichungstag der Anmeldung: 12.02.2014
(73) Patentinhaber: MAHLE Behr GmbH & Co. KG, 70469 Stuttgart (DE)
(72) Erfinder: Werz, Michael, 72800 Eningen (DE); Ignjatovic, Dipl.-Ing. Spasoje, 75428 Illingen (DE); Kölblin, Dr.-Ing. Rüdiger, 73732 Esslingen (DE)
(74) Vertreter: Grauel, Andreas

(56) Entgegenhaltungen:
- EP-A2- 1 816 425
- EP-A2- 1 995 544
- DE-A1- 10 022 595
- DE-A1-102007 010 134
- DE-A1-102007 031 419
- DE-A1-102009 050 884
- DE-B4-102008 049 252
- ES-A1- 2 353 793
- FR-A1- 2 954 482
- JP-A- 2002 168 586
- US-A- 3 793 701
- US-B1- 6 438 839
- US-B1- 6 510 920
- US-B2- 7 256 373

## Beschreibung

### Technisches Gebiet

Die Erfindung betrifft einen Wärmeübertrager zur Kühlung von Abgasen eines Verbrennungsmotors, mit einer Vielzahl von ein erstes Fluid führenden Rohren, welche in ihren Endbereichen in Rohrböden aufgenommen sind, mit einem Gehäuse, welches die Rohre umgibt, wobei das Gehäuse von einem zweiten Fluid durchströmbar ist und die Rohre von dem zweiten Fluid umströmbar sind, wobei die Rohrböden in dem Gehäuse eingesetzt sind, dass ein erster das erste Fluid führender Kanal von einem zweiten das zweite Fluid führenden Kanal abgedichtet ist.

Ein solcher Wärmeübertrager entsprechend dem Oberbegriff von Anspruch 1 wird jeweils durch die Patentschriften DE 10 2007 031419 oder EP 1 816 425 offenbart.

### Stand der Technik

Im heutigen Stand der Technik werden Abgaswärmeübertrager oft vollständig aus Edelstahl gefertigt. Dies ist den hohen Anforderungen hinsichtlich der Abgastemperaturen und den korrosiven Eigenschaften der Abgase geschuldet. Edelstahlwärmeübertrager dieser Art werden heute durch Schweißverfahren, wie etwa das Laser-oder MAG-Schweißen, gefügt.

Alternativ werden Wärmeübertrager aus Kombinationen von Edelstahl und Aluminium nach dem Stand der Technik über geschraubte Flanschverbindungen, also über formschlüssige Verbindungen erzeugt, da es bisher durch Nutzung der bekannten thermischen Fügeverfahren, wie etwa dem MIG/MAG-Schweißen oder dem Cold Metal Transfer, nicht möglich war Aluminium mit Edelstahl stoffschlüssig zu verbinden. Dies macht unter anderem zusätzliche Bauteile, wie etwa Dichtungen, notwendig, außerdem sind hierdurch die Anforderungen hinsichtlich der Toleranzlagen der Bauteile besonders hoch, um eine fluiddichte Verbindung der Komponenten zu gewährleisten.

Aus technischen Gründen ist die stoffschlüssige Verbindung von Aluminium und Edelstahl für den Einsatz in Wärmeübertragern zunehmend erforderlich, weshalb es notwendig ist, ein Verfahren zum stoffschlüssigen Fügen von Aluminium- und Edelstahlkomponenten bereitzustellen.

Hierfür ist am Stand der Technik insbesondere nachteilig, dass bisher kein geeignetes Verfahren zur stoffschlüssigen Verbindung von Aluminiumbauteilen und Stahlbauteilen, und hierbei insbesondere Edelstahlbauteilen, verfügbar ist.

### Darstellung der Erfindung, Aufgabe, Lösung, Vorteile

Daher ist es die Aufgabe der vorliegenden Erfindung, eine Ausführungsform eines im Wesentlichen aus Aluminium oder Aluminiumlegierungen und Stahl, insbesondere Edelstahl, aufgebautem Wärmeübertrager bereitzustellen sowie ein Verfahren, welches es ermöglicht Aluminium- und Stahlkomponenten, insbesondere Edelstahlkomponenten, stoffschlüssig miteinander zu verbinden, um so Kosten für zusätzliche Bauteile zu vermeiden und weiterhin eine höhere Güte der Verbindung zu erreichen. Auch ist es die Aufgabe, ein entsprechendes Verfahren zu schaffen.

Die Aufgabe der vorliegenden Erfindung wird durch eine Vorrichtung mit den Merkmalen gemäß Anspruch 1 gelöst.

Ein Ausführungsbeispiel der Erfindung betrifft einen Wärmeübertrager zur Kühlung von Abgasen eines Verbrennungsmotors, mit einer Vielzahl von ein erstes Fluid führenden Rohren, welche in ihren Endbereichen in Rohrböden aufgenommen sind, mit einem Gehäuse, welches die Rohre umgibt, wobei das Gehäuse von einem zweiten Fluid durchströmbar ist und die Rohre von dem zweiten Fluid umströmbar sind, wobei die Rohrböden so in dem Gehäuse eingesetzt sind, dass ein erster das erste Fluid führender Kanal von einem zweiten das zweite Fluid führenden Kanal abgedichtet ist, wobei das Gehäuse an zumindest einem seiner Endbereiche einen umlaufenden Rand aufweist, in welchen ein Diffusor einsteckbar oder aufsetzbar ist, wobei das Gehäuse aus Aluminium oder einer Aluminiumlegierung gefertigt ist und der erste Diffusor aus Stahl gefertigt ist. Zur fluiddichten und stoffschlüssigen Verbindung des Gehäuses und des Diffusors wird ein elektromagnetisches Puls-Technologie Verfahren eingesetzt.

Auch ist es vorteilhaft, wenn einer der axialen Endbereiche des Diffusors durch ein aus Aluminium gefertigtes umlaufendes Anschlusselement gebildet ist, wobei der Diffusor mit dem durch das Anschlusselement gebildeten Endbereich in oder auf den umlaufenden Rand des Gehäuses einsteckbar oder aufsetzbar ist. Das Anschlusselement kann dabei als eine Art Adapter fungieren und einerseits den dem Gehäuse zugewandten Abschluss des Diffusors bilden und andererseits eine Kontaktfläche aufweisen, an welche das Gehäuse angebunden werden kann.

Das Anschlusselement ist dabei vorteilhafterweise ein Ringelement, welches vollständig umlaufend am axialen Endbereich des Diffusors angeordnet ist und so eine Anbindungsfläche zu dem aus Aluminium gefertigten Gehäuse darstellt. Auf diese Weise kann zwischen dem Anschlusselement und dem Gehäuse eine Verbindung mit einem Aluminium-Aluminium Kontakt erzeugt werden. Der Diffusor kann mit seinem durch das Anschlusselement gebildeten Endbereich auf oder in den Randbereich des Gehäuses aufgesetzt oder eingesteckt werden.

Darüber hinaus ist es zweckmäßig, wenn die Kontaktfläche zwischen dem Diffusor und dem Gehäuse vollständig durch das am Diffusor angebrachte Anschlusselement gebildet ist.

Auch ist es zu bevorzugen, wenn das Anschlusselement eine radial und/oder axial verlaufende flächige Erstreckung aufweist, welche als Kontaktfläche zur Befestigung des Anschlusselementes am Gehäuse dient. Diese Erstreckung kann dabei beispielsweise durch einen umlaufenden Flansch ausgebildet sein.

Die Aufgabe des Verfahrens wird unter anderem durch ein Verfahren mit den Merkmalen des Anspruchs 5 gelöst, wobei die folgenden Schritte ausgeführt werden:
▪ Herstellen des Kerns eines Wärmeübertragers, aus Rohren, Rohrböden, sowie einem Gehäuse, welches an den Endbereichen jeweils einen umlaufenden Rand aufweist.
▪ Positionieren eines aus Aluminium gefertigten Anschlusselementes an einem Randbereich eines aus Stahl gefertigten Diffusors.
▪ Einbringen des Diffusors und des Anschlusselementes in eine an die Werkstückgeometrie angepasste Spulenanordnung.
▪ Dauerhafte Verbindung des aus Stahl gefertigten Diffusors mit dem aus Aluminium gefertigten Anschlusselement mittels eines elektromagnetischen Puls-Technologie Verfahrens.
▪ Einstecken oder Aufsetzen des Anschlusselementes des Diffusors in oder auf den umlaufenden Rand eines Endbereiches des Gehäuses.
▪ Dauerhafte Verbindung des Anschlusselementes mit dem Gehäuse unter Verwendung eines Metallschutzgas-Schweißverfahrens.

Auch ist es zu bevorzugen, wenn zwischen dem Diffusor und dem Anschlusselement ein Stahl-Aluminium Kontakt besteht und zwischen dem Anschlusselement und dem Gehäuse ein Aluminium-Aluminium Kontakt besteht.

Durch die Verwendung eines elektromagnetischen Puls-Technologie Verfahrens kann Stahl, und insbesondere Edelstahl, mit Aluminium oder einer Aluminiumlegierung verbunden werden. Der Diffusor muss dafür so an dem Gehäuse positioniert werden, dass sich ein flächiger Kontakt zwischen dem Diffusor und dem Gehäuse ergibt.

Das elektromagnetische Puls-Technologie Verfahren ermöglicht es, eine Verbindung zwischen dem Diffusor und dem Gehäuse zu schaffen und dabei auf Schraubverbindungen oder andere Maßnahmen, wie beispielsweise den Einsatz von Schellen, zu verzichten.

Weiterhin ist es zu bevorzugen, wenn der Diffusor einen Endbereich aufweist, welcher in den umlaufenden Rand des Gehäuses einsteckbar oder auf diesen aufsetzbar ist, wodurch zwischen Gehäuse und Diffusor ein flächiger Kontakt entsteht.

Der flächige Kontakt zwischen Diffusor und Gehäuse ist notwendig, um das elektromagnetische Puls-Technologie Verfahren anwenden zu können. Für einen optimalen Montageprozess ist es vorteilhaft, wenn der Diffusor und das Gehäuse gegeneinander so ausgerichtet sind, dass eine relative Bewegung der Elemente zueinander ausgeschlossen ist.

Weiterhin vorteilhaft ist es, wenn sich an den flächigen Kontakt des Diffusors eine Verjüngung anschließt, die in einen Anschlussflansch mündet. Hierdurch wird ein besserer Strömungsverlauf im Inneren des Diffusors erzeugt.

In einem alternativen Ausführungsbeispiel ist es vorteilhaft, wenn durch die Rohre ein gasförmiges Fluid, insbesondere Abgas eines Verbrennungsmotors, strömbar ist und durch das Gehäuse ein flüssiges Fluid, insbesondere eine Kühlflüssigkeit, strömbar ist.

Durch die Kombination der Fluide ist eine optimale Funktionsweise des Wärmeübertragers und ein hoher Wirkungsgrad begünstigt.

Die Aufgabe des Verfahrens wird auch durch ein Verfahren mit den Merkmalen des Anspruchs 10 gelöst, wobei die folgenden Schritte ausgeführt werden:
▪ Herstellen des Kerns eines Wärmeübertragers aus Rohren, Rohrböden, sowie einem Gehäuse, welches an den Endbereichen jeweils einen umlaufenden Rand aufweist.
▪ Einstecken oder Aufsetzen eines Diffusors in oder auf den umlaufenden Rand eines Endbereiches des Gehäuses.
▪ Einbringen der ineinandergesteckten oder aufeinandergesetzten Elemente, in eine an die Werkstückgeometrie angepasste Spulenanordnung.
▪ Dauerhafte Verbindung des Gehäuses und des Diffusors unter Verwendung eines elektromagnetischen Puls-Technologie Verfahrens.

Dabei ist es vorteilhaft, wenn zwischen dem Diffusor und dem Gehäuse ein Stahl-Aluminium Kontakt besteht.

Durch den Kontakt zwischen dem Stahlbauteil und dem Aluminiumbauteil kann das elektromagnetische Puls-Technologie Verfahren eingesetzt werden um eine dauerhafte Verbindung zu erzeugen. Der teilweise Aufbau des Wärmeübertragers aus Aluminium senkt das Gesamtgewicht des Wärmeübertragers. Der Aufbau des Diffusors aus Stahl ist aus Sicht der Haltbarkeit und Widerstandsfähigkeit gegen die heißen Abgase vorteilhaft. Die Kombination aus beiden Werkstoffen ergibt den beschriebenen Kontakt zwischen Stahl und Aluminium.

Es ist außerdem zweckmäßig, wenn die Stoßstelle zwischen dem Diffusor und dem Gehäuse von einem umlaufenden Band umfasst ist, welches aus Aluminium oder einer Aluminiumlegierung besteht.

Durch das umlaufende Band wird ein Kontakt sowohl mit dem Diffusor, als auch mit dem Gehäuse hergestellt. Durch das Anwenden des elektromagnetischen Puls-Technologie Verfahrens kann so eine vorteilhafte fluiddichte Verbindung des Diffusors mit dem Gehäuse erzeugt werden.

Weiterhin ist es zu bevorzugen, wenn das Gehäuse und das umlaufende Band im Wesentlichen aus Aluminium oder einer Aluminiumlegierung gefertigt sind. Dies ist hinsichtlich des Gewichts des Bauteils vorteilhaft.

Auch ist es zweckmäßig, wenn der Diffusor einen Endbereich aufweist, welcher in den umlaufenden Rand des Gehäuses einsteckbar ist, worauf am Diffusor eine umlaufende Stufe folgt, deren Außenkontur bündig mit der Außenkontur des umlaufenden Rands des Gehäuses abschließt.

Durch die beschriebene Ausgestaltung des Gehäuses und des Diffusors ist eine genaue Positionierung der beiden Elemente zueinander einfach zu erreichen. Weiterhin ist eine Relativbewegung der beiden Elemente zueinander durch die Ausgestaltung wirkungsvoll erschwert. Der bündige Abschluss der Stufe des Diffusors mit dem umlaufenden Rand des Gehäuses bildet zudem eine geeignete Fläche für das Aufbringen des umlaufenden Bandes.

Die Aufgabe des Verfahrens wird weiterhin vorteilhaft von einem Verfahren mit den Merkmalen des Anspruchs 14 gelöst, wobei die folgenden Schritte ausgeführt werden:
▪ Herstellen des Kerns eines Wärmeübertragers aus Rohren, Rohrböden, sowie einem Gehäuse, welches an den Endbereichen jeweils einen umlaufenden Rand aufweist.
▪ Einstecken eines Diffusors in den umlaufenden Rand eines Endbereiches des Gehäuses.
▪ Umfassen der Stoßstelle zwischen Diffusor und Gehäuse mit dem umlaufenden Band.
▪ Einbringen der ineinandergesteckten Elemente und des um die Stoßstelle umlaufenden Bandes, in eine an die Werkstückgeometrie angepasste Spulenanordnung.
▪ Dauerhafte Verbindung des Gehäuses und des Diffusors durch das umlaufende Band unter Verwendung eines elektromagnetischen Puls-Technologie Verfahrens.

Die Anwendung des Verfahrens ist vorteilhaft, da durch das zusätzliche umlaufende Band eine weitere Abdichtwirkung erzielt wird. Außerdem ist das Anwenden des elektromagnetischen Puls-Technologie Verfahrens begünstigt, da das mittels des Verfahrens zu verformende Bauteil am Außenradius des Wärmeübertragers angeordnet ist, und so besonders leicht zugänglich ist.

Des Weiteren ist es zu bevorzugen, wenn zwischen dem Gehäuse und dem umlaufenden Band ein Aluminium-Aluminium Kontakt besteht und zwischen dem Diffusor und dem Gehäuse sowie dem Diffusor und dem umlaufenden Band ein Stahl-Aluminium Kontakt besteht.

Diese Kombination der Kontaktflächen ist insbesondere für die Anwendung des elektromagnetischen Puls-Technologie Verfahrens vorteilhaft, da mit einem Verfahrensschritt eine Verbindung von zwei unterschiedlichen Kontaktpaaren erreicht werden kann. Zusätzlich ist der möglichst weitreichende Einsatz von Aluminium dem Gesamtsystemgewicht zuträglich.

Außerdem ist es vorteilhaft, wenn durch das elektromagnetische Puls-Technologie Verfahren eine fluiddichte und stoffschlüssige Verbindung zwischen dem Gehäuse und dem Diffusor oder zwischen dem Anschlusselement und dem Diffusor geschaffen wird.

Erst durch eine fluiddichte Verbindung des Diffusors und des Gehäuses ist ein funktionstüchtiger Wärmeübertrager zu erreichen. Eine stoffschlüssige Verbindung ermöglicht zudem eine längere Dauerhaltbarkeit des gesamten Wärmeübertragers.

Auch ist es zweckmäßig, wenn zwischen den ineinandergesteckten oder aufeinandergesetzten Elementen und der an die Werkstückgeometrie angepassten Spulenanordnung ein sehr kleiner, vorzugweise im Bereich von wenigen Millimetern liegender Spalt existiert.

Um eine möglichst optimale Wirkung des elektromagnetischen Puls-Technologie Verfahrens zu erreichen, ist es notwendig, möglichst geringe Abstände zwischen den verwendeten Spulen und den umzuformenden Werkstücken zu realisieren. Durch möglichst geringe Spalte kann das Ergebnis des Verfahrens verbessert werden.

Vorteilhafte Weiterbildungen sind in der nachfolgenden Figurenbeschreibung und den Unteransprüchen definiert.

### Kurze Beschreibung der Zeichnungen

Im Folgenden wird die Erfindung anhand eines Ausführungsbeispiels unter Bezugnahme auf die Zeichnung detailliert erläutert. In der Zeichnung zeigen:
- Fig. 1: eine Seitenansicht eines Wärmeübertragers,
- Fig. 2: eine perspektivische Ansicht eines Wärmeübertragers,
- Fig. 3: eine Aufsicht auf einen der Anschlussflansche des Wärmeübertragers, welcher in Figur 1 und 2 gezeigt ist,
- Fig. 4: einen Schnitt durch die Mittelebene eines Wärmeübertragers in einer Spulenanordnung, welche zum Anwenden des elektromagnetischen Puls-Technologie Verfahrens um das Bauteil positioniert ist,
- Fig. 5: einen Schnitt durch die Mittelebene eines Wärmeübertragers eines alternativen Ausführungsbeispiels, mit einer alternativen Gestaltung der Stoßstelle zwischen Diffusor und Gehäuse,
- Fig. 6: einen Schnitt durch die Mittelebene eines Wärmeübertragers eines weiteren alternativen Ausführungsbeispiels, mit einer alternativen Gestaltung der Stoßstelle zwischen Diffusor und Gehäuse,
- Fig. 7: einen Schnitt durch die Mittelebene eines Wärmeübertragers eines weiteren alternativen Ausführungsbeispiels, mit einer alternativen Gestaltung der Stoßstelle zwischen Diffusor und Gehäuse,
- Fig. 8: einen Schnitt durch die Mittelebene eines Wärmeübertragers, mit einer alternativen Ausführung der Stoßstelle zwischen Diffusor und Gehäuse, ohne umlaufendes Band,
- Fig. 9: einen Schnitt durch die Mittelebene eines Wärmeübertragers, mit einer weiteren alternativen Ausführung der Stoßstelle zwischen Diffusor und Gehäuse, ohne umlaufendes Band,
- Fig. 10: die Anordnung eines Wärmeübertragers gemäß Figur 8 innerhalb einer Spule, zur Anwendung des elektromagnetischen Puls-Technologie Verfahrens, im Schnitt durch die Mittelebene des Wärmeübertragers,
- Fig. 11: einen Schnitt durch die Mittelebene eines Wärmeübertragers eines alternativen Ausführungsbeispiels, mit einer alternativen Gestaltung der Stoßstelle zwischen Diffusor und Gehäuse, wobei am Diffusor und damit zwischen dem Diffusor und dem Gehäuse ein Anschlusselement vorgesehen ist, und
- Fig. 12: einen Schnitt durch die Mittelebene eines Wärmeübertragers, mit einer weiteren alternativen Ausführung der Stoßstelle zwischen Diffusor und Gehäuse, wobei ein T-förmiges Anschlusselement zwischen dem Diffusor und dem Gehäuse angeordnet ist.

### Bevorzugte Ausführung der Erfindung

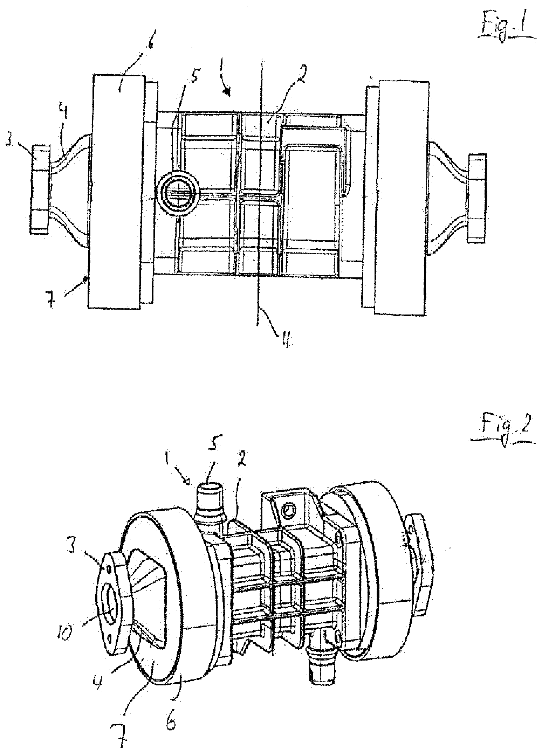

Die Figur 1 zeigt eine Seitenansicht eines Wärmeübertragers 1. Der Wärmeübertrager 1 ist spiegelsymmetrisch zu seiner Mittelebene 11 aufgebaut. Die weitere Beschreibung beschränkt sich daher auf die linke der beiden in Figur 1 gezeigten Hälften. Die Bezugszeichen für die rechte Hälfte stimmen mit denen der linken Hälfte überein.

Der in Figur 1 gezeigte Wärmeübertrager 1 entspricht in seinem wesentlichen Funktionsprinzip den aus dem Stand der Technik bekannten Wärmeübertragern.

Im Inneren weist der Wärmeübertrager 1 eine Mehrzahl von Rohren auf, welche in ihren Endbereichen in Öffnungen von Rohrböden eingefasst sind. Diesen Kern aus Rohren und Rohrböden nimmt das Gehäuse 2 auf. Die Rohrböden sind so mit den Endbereichen des Gehäuses 2 verbunden, dass das Gehäuse 2 einen fluiddichten Raum darstellt innerhalb welchem die Rohre umströmbar sind. Die Anschlussstutzen 5 bilden für den Wärmeübertrager 1 den Zu- bzw. Ablauf für das erste Medium, welches das Gehäuse 2 durchströmt und damit die im Gehäuse 2 angeordneten Rohre umströmt.

Am Endbereich des Gehäuses 2 ist ein Diffusor 7 angebracht. Der Diffusor 7 besteht aus einem zylindrischen Bereich an welchen sich eine Verjüngung 4 anschließt, welche in einen Flansch 3 endet. Der Flansch 3 weist eine mittige Bohrung 10 auf, welche als Anschlussöffnung für den Diffusor 7 geeignet ist. Über den Flansch 3 kann eine hier nicht gezeigte Zu- bzw. Abströmleitung an den Wärmeübertrager angeschlossen werden. Über diese ist der Wärmeübertrager 1 mit einem zweiten Fluid durchströmbar.

Der Strömungsweg des zweiten Fluides verläuft durch den Flansch 3 über den Verjüngungsbereich 4 des Diffusors 7 durch die im Inneren des Gehäuses 2 angeordneten Flachrohre hin zum zweiten Diffusor 7 durch dessen Verjüngungsbereich 4 durch den zweiten Flansch 3 aus dem Wärmeübertrager 1 heraus.

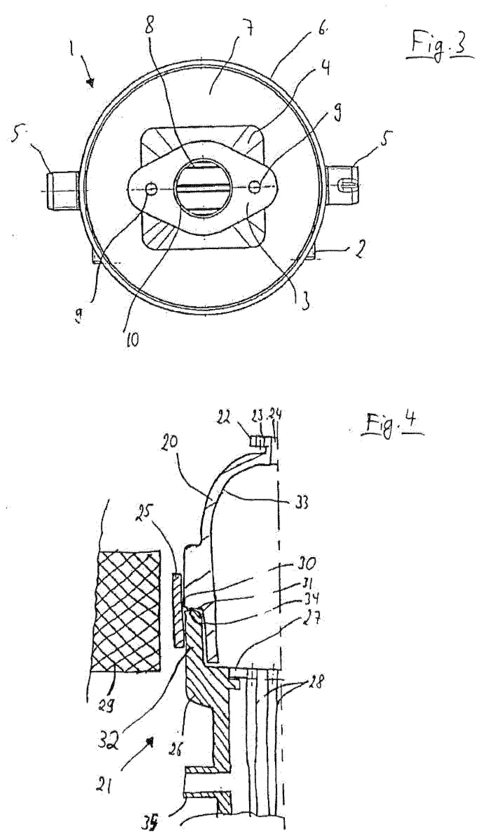

Der Diffusor 7 ist in den Endbereich des Gehäuses 2 eingesteckt und über eine stoffschlüssige Verbindung, welche mittels eines elektromagnetischen Puls-Technologie Verfahrens erzeugt wird, mit dem Gehäuse 2 verbunden. Hierzu ist die Stoßstelle zwischen dem Gehäuse 2 und dem Diffusor 7 mit einem umlaufenden Band 6 umfasst. Der genaue Aufbau dieser Verbindung zwischen dem Diffusor 7 und dem Gehäuse 2 und dem umlaufenden Band 6 ist in den Figuren 4 bis 7 dargestellt. Ebenso ist eine detaillierte Beschreibung des Verbindungsverfahrens dort gegeben.

Die Figur 2 zeigt eine perspektivische Ansicht des bereits in Figur 1 dargestellten Wärmeübertragers 1. Die Bezugszeichen stimmen mit denen der Figur 1 überein.

Das in Figur 2 gezeigte Gehäuse 2 weist eine rechteckige Außenkontur auf, welche mit weiteren Verstärkungsrippen versehen ist. Außerdem weist das Gehäuse 2 Flanschbereiche auf mit welchen der gesamte Rohrbündelwärmeübertrager an einer dafür vorgesehenen Stelle montierbar ist. In weiteren erfindungsgemäßen Ausführungen kann die Außenformgebung des Gehäuses 2 von der hier gezeigten abweichen. So sind zum Beispiel runde Außenkonturen mit und ohne zusätzliche Verstärkungsrippen denkbar.

Wesentlich für eine erfindungsgemäße Ausführung ist, dass das Gehäuse 2, das umlaufende Band 6 und der Diffusor 7 aus metallischem Material gefertigt sind. In der erfindungsgemäßen Ausführung sind das Gehäuse 2 und das umlaufende Band 6 aus Aluminium oder einer Aluminiumlegierung gefertigt. Der Diffusor 7 ist aus Stahl gefertigt.

Die Figur 3 zeigt eine Aufsicht auf einen der Anschlussflansche 3 des Wärmeübertragers 1. Die Bezugszeichen stimmen mit denen der Figur 1 und Figur 2 überein. Abweichungen hierzu werden durch neue Bezugszeichen hervorgehoben.

Der Anschlussflansch 3 weist eine rautenförmige Grundform auf. Die beiden Bohrungen 9a, 9b dienen der Verschraubung einer im Bild nicht gezeigten Anschlussleitung mit dem Anschlussflansch 3. Die Bohrung 10, welche durch den Anschlussflansch und durch den Verjüngungsbereich 4 in das Innere des Diffusors 7 führt, dient als Zu- bzw. Abströmöffnung für das zweite Fluid, mit welchem der Wärmeübertrager 1 durchströmbar ist.

Durch die Bohrung 10 sind im Inneren die Rohre 8 zu erkennen, welche den inneren Strömungsweg für das durch die Bohrung 10 ein- bzw. austretende Fluid durch den Wärmeübertrager 1 darstellen.

Der Wärmeübertrager 1 weist im Wesentlichen 2 Strömungswege auf. Der Strömungsweg für ein erstes Fluid verläuft hierbei durch einen der Anschlussstutzen 5 hindurch in das Gehäuse 2 hinein, wobei die Rohre 8 umströmt werden. Das Fluid tritt sodann über den zweiten Anschlussstutzen 5 wieder aus dem Gehäuse 2 aus. Das zweite Fluid, welches über eine der Bohrungen 10 in den Anschlussflansch 3 in den Diffusor 7 einströmt, strömt dann im Inneren der Flachrohre 8 durch das Gehäuse 2 und über den zweiten Diffusor 7 durch die zweite Bohrung 10 aus dem Wärmeübertrager 1 aus. Der Wärmeübergang findet damit im Inneren des Gehäuses 2 im Bereich der Rohre 8 statt.

Figur 4 zeigt einen Schnitt durch die Mittelebene eines Wärmeübertragers 21. In Figur 4 ist eine detaillierte Darstellung des Aufbaus des Wärmeübertragers 21 abgebildet.

Dargestellt ist das Gehäuse 26 des Wärmeübertragers 21, welches einen Anschlussstutzen 35 aufweist. Über diesen Anschlussstutzen 35 kann ein erstes Fluid in das Innere des Gehäuses 26 ein- bzw. ausströmen. Dabei umströmt es die im Inneren des Gehäuses 26 verlaufenden Rohre 28. Die Rohre 28 sind in ihren Endbereichen jeweils in einen Rohrboden 27 eingefasst. Der Rohrboden 27 ist so mit dem Gehäuse 26 verbunden, dass das Innere des Gehäuses 26 einen fluiddichten Raum darstellt. Durch die Verbindung zwischen dem Rohrboden 27 und dem Gehäuse 26 ist insbesondere ein erstes Fluid, welches innerhalb der Flachrohre 28 durch den Wärmeübertrager 21 strömt, von einem zweiten Fluid, welches um die Flachrohre 28 strömt, getrennt.

In alternativen Ausführungsformen sind weiter vielfältige Möglichkeiten vorstellbar, wie der Wärmeübertrager aufgebaut sein kann. So können die Flachrohre unter anderem ein rechteckiges oder rundes Profil aufweisen, der Rohrboden kann einteilig mit dem Gehäuse oder mit diesem verlötbar ausgeführt sein. Weiterhin kann die Positionierung der Zu- und Ablaufstutzen von der hier gezeigten Form abweichen.

Der in Figur 4 gezeigte Wärmeübertrager 21 weicht zwar in einigen Aspekten von dem in den Figuren 1 bis 3 dargestellten Wärmeübertrager ab, jedoch ist die Verbindung zwischen dem Diffusor 20 und dem Gehäuse 26, welche als erfindungswesentlich anzusehen ist, prinzipiell gleich.

Das Gehäuse 26 weist einen umlaufenden Rand 32 auf, in welchen der Diffusor 20 eingesteckt ist. Der Diffusor 20 ist zu diesem Zweck in drei Abschnitte aufgeteilt. Der erste Abschnitt ist so dimensioniert, dass er passgenau in den umlaufenden Rand 32 des Gehäuses 26 einsteckbar ist. Der Außendurchmesser des Diffusors 20 entspricht dafür dem Innendurchmesser des umlaufenden Randes 32 des Gehäuses 26.

An diesen Abschnitt schließt sich im Diffusor 20 eine umlaufende äußere Stufe an, deren Höhe so dimensioniert ist, dass die Außenkontur des Diffusors 20 im eingesteckten Zustand eine bündige Abschlussfläche 30 mit der Außenkontur des Gehäuses 26 darstellt. Die Innenkontur des Diffusors weißt diese Stufe nicht auf, woraus resultiert, dass die Materialstärke des Diffusors 20 durch die beschriebene Stufe zunimmt.

Im weiteren Verlauf verjüngt sich der Diffusor bis er in einen Flansch 22 mündet, an welchen eine Zu- bzw. Ableitung angeschlossen werden kann, wodurch durch die Bohrung 24 ein Fluid in den Wärmetauscher 21 strömen kann.

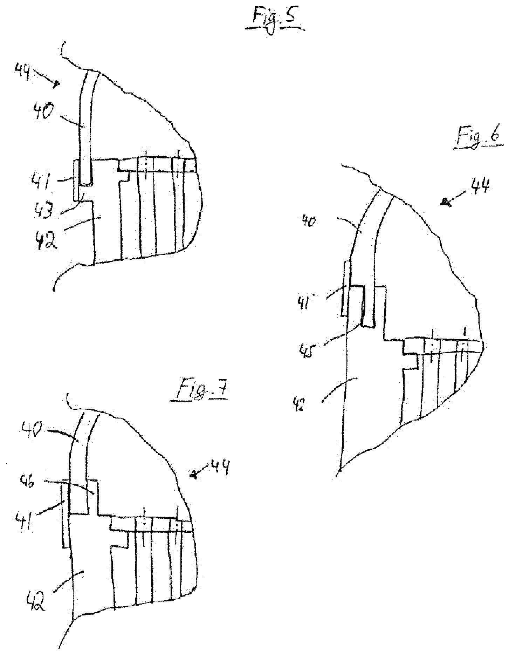

In alternativen Ausführungsformen kann der Endbereich des Gehäuses 26, in welchen der Diffusor 20 eingesteckt ist, auch anders ausgeformt sein. Hierzu sind in den Figuren 5 bis 7 noch denkbare Ausführungsformen dargestellt.

Maßgeblich für die Anwendung des erfindungsgemäßen Verbindungsverfahrens ist, dass um die Stoßstelle 34 des Diffusors 20 und des Gehäuses 26 eine bündige umlaufende Fläche vorgesehen ist, um die das umlaufende Band 25 verlaufen kann, wobei es einen ausreichend großen Kontakt mit dem Diffusor 20 und dem Gehäuse 26 haben muss. Weiterhin sollten der Diffusor 20 und das Gehäuse 26 so ausgebildet sein, dass ein Verrutschen der beiden Komponenten während der Anwendung des Verbindungsverfahrens ausgeschlossen ist.

Das umlaufende Band 25, welches wie das Gehäuse 26 aus Aluminium oder einer Aluminiumlegierung gefertigt ist, umfasst diese sich zwischen dem Diffusor 20, welcher im Wesentlichen aus Stahl gefertigt ist, aber auch aus einem anderen metallischen Werkstoff gefertigt sein kann und dem Gehäuse 26 bildende bündige Fläche und ist so dimensioniert, dass es eng an der Außenwand des Diffusors 20 und der Außenwand des Gehäuses 26 anliegt.

In alternativen Ausführungsformen kann die Stoßstelle zwischen dem Gehäuse und dem Diffusor auch auf anderer Art und Weise ausgebildet sein. Wichtig ist hier insbesondere, dass sich eine bündige Oberfläche ergibt, welche mit einem Aluminiumband bzw. mit einem Band aus einem metallischen Werkstoff umfasst werden kann. Ebenfalls sind die genaue Formgebung des Diffusors 20 sowie die Formgebung des umlaufenden Randes 32 des Gehäuses 26 nicht maßgeblich. Vielmehr ist darauf zu achten, dass der Diffusor 20 und das Gehäuse 26 in einer solchen Art und Weise ausgebildet sind, dass sie so gegeneinander ausgerichtet werden können, dass eine definierte bündige Fläche entsteht.

Zur Verbindung der Elemente wird ein elektromagnetisches Puls-Technologie Verfahren angewendet. Dies ist in Figur 4 durch eine Spulenanordnung 29 angedeutet in welche die zusammengesteckten Elemente eingebracht werden. Zur korrekten Nutzung des Verfahrens ist es notwendig, dass die zu verbindenden Elemente elektrisch leitfähig sind. Je besser die Leitfähigkeit des Materials ist, welches durch das elektromagnetische Puls-Technologie Verfahren verformt werden soll, umso höher sind die Kräfte, die auf das zu verformende Material wirken.

Das eingesetzte Verfahren ist im Prinzip ein Umformverfahren, bei dem das um den Diffusor 20 und das Gehäuse 26 gelegte umlaufende Band 25 durch das Verfahren schlagartig nach innen beschleunigt wird. Hierdurch wird das umlaufende Band 25 verformt und ähnlich dem Sprengschweißen auf die zu verbindenden Materialien gedrückt.

Um das umlaufende Band 25 so zu beschleunigen, wird der zusammengesteckte Wärmetauscher 21 in eine Spulenanordnung 29 eingebracht. Wichtig ist hierbei, dass keine großen Luftspalte zwischen dem Wärmetauscher 21 und der Spulenanordnung entstehen. Dies bedingt eine werkstückbezogene Geometrie der Spule. Der Luftspalt zwischen dem zu beschleunigenden Material, im erfindungsgemäßen Fall dem umlaufenden Band 25 und den zu verbindenden Elementen, also dem Diffusor und dem Gehäuse, sollte im Bereich von einigen Zehntelmillimeter bis zu wenigen Millimetern liegen.

Das zu beschleunigende Blech wird durch die Spule blitzartig auf ca. 200m/s beschleunigt. Durch das schlagartige Auftreffen auf den zu verbindenden Materialien werden die Oxidschichten der metallischen Oberflächen gelöst und sämtliche Luft zwischen den Kontaktflächen verdrängt. Hierdurch entstehen hochgradig reaktive Flächen, die unter extremem Kontaktdruck stehen. Dadurch wird eine fluiddichte, metallische, auf Basis von Elektronenaustausch funktionierende Verbindung geschaffen.

Figur 5 zeigt ein weiteres Ausführungsbeispiel für die Verbindung von Diffusor 40 und Gehäuse 42 eines Wärmeübertragers 44. Hier umfasst der Diffusor 40 den Endbereich des Gehäuses 42 von außen. Zusätzlich weist das Gehäuse 42 anstelle des umlaufenden Randes, wie etwa in Figur 4, hier einen an den Endbereichen des Gehäuses angeordneten umlaufenden Absatz 43 auf. Das Gehäuse 42 ist hier so tief in den Diffusor 40 eingesteckt, dass ein Kontakt zwischen dem Endbereich des Diffusors 40 und dem umlaufenden Absatz 43 des Gehäuses 42 entsteht.
Auch in dieser Ausführungsform umfasst das umlaufende Band 41 die Stoßstelle zwischen Diffusor 40 und Gehäuse 42.

Figur 6 zeigt ein anderes Ausführungsbeispiel, bei dem das Gehäuse 42 eine umlaufende Nut 45 in seinen Endbereichen aufweist. Der Diffusor 40 wird in diese Nut eingesteckt. Wie in Figur 4 weist der Diffusor 40 auch hier eine umlaufende Stufe auf, welche mit dem Gehäuse 42 einen bündigen, umlaufenden Abschluss bildet, welcher von dem umlaufenden Band 41 umfasst ist.

Figur 7 zeigt ein weiteres denkbares Ausführungsbeispiel. Hier weist das Gehäuse 42 nun in seinen Endbereichen einen umlaufenden Vorsprung 46 auf, auf welchen der Diffusor 40 aufgesteckt wird. In diesem Fall weist der Diffusor 40 wie auch in dem Ausführungsbeispiel in Figur 5 keine Stufe auf. Die Außenfläche des Diffusors 40 bildet in beiden Figuren mit der Außenfläche des Gehäuses 42 eine bündige Fläche, welche von dem umlaufenden Band 41 umfasst wird.

Die Materialwahl für den Diffusor, das umlaufende Band und das Gehäuse ist entsprechend der Anforderungen, die durch den Betrieb des Wärmeübertragers entstehen, zu treffen. Um das erfindungsgemäße Verfahren anwenden zu können, ist insbesondere für das umlaufende Band, welches letztlich die dauerhafte Verbindung von Diffusor und Gehäuse ermöglicht, ein sehr gut leitendes metallisches Material zu wählen.

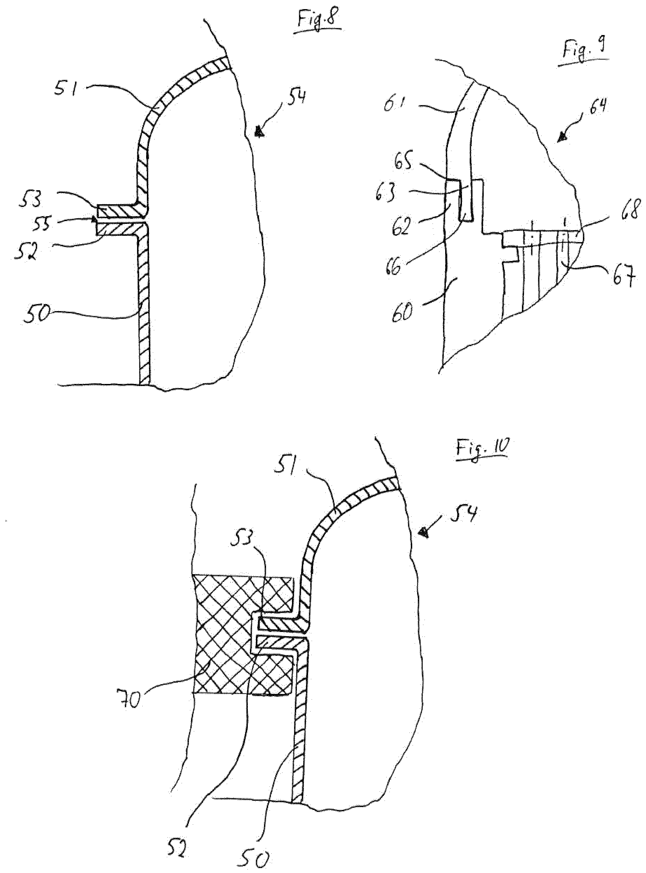

Die Figur 8 zeigt eine alternative Ausführungsform eines Wärmeübertragers 54. Die Stoßstelle 55 zwischen dem Diffusor 51 und dem Gehäuse 50 ist nun nicht mehr, wie in den vorherigen Figuren 1 bis 7, von einem Aluminiumband 6, 25 umfasst.

Der Diffusor 51 bildet in seinem Fußbereich einen umlaufenden Flansch 53 aus, der auf den umlaufenden Rand 52 des Gehäuses 50, welcher ebenfalls flanschartig ausgebildet ist, aufgesetzt ist. Der Diffusor 51 und das Gehäuse 50 haben dadurch an der Stoßstelle 55 einen flächigen Kontakt.

Die Verbindung des Diffusors 51 und des Gehäuses 50 wird dann nachfolgend durch ein elektromagnetisches Puls-Technologie Verfahren erzeugt, welches den Flansch 53 und den umlaufenden Rand 52 miteinander verbindet.

In alternativen Ausführungsformen könnte anstelle des umlaufenden dünnwandigen Flansches 53 am Diffusor auch eine umlaufende Stufe aus einem Vollmaterial vorgesehen werden. Auch ist es vorsehbar, dass am Gehäuse 50 oder Diffusor 51 Elemente, wie Vorsprünge oder Absätze, angeordnet sind, die eine Relativbewegung des Gehäuses zum Diffusor verhindert.

Grundsätzlich muss jedoch eine umlaufende Fläche am Diffusor 51 und am Gehäuse 50 ausgebildet sein, über welche die beiden Elemente einen flächigen Kontakt haben können. Zumindest eines der beiden Elemente, vorzugsweise das Element aus Aluminium, muss dabei, im montierten Zustand, von außen zugänglich sein, so dass das elektromagnetische Puls-Technologie Verfahren angewendet werden kann.

Die Figur 9 zeigt eine weitere alternative Ausführungsform zur Verbindung eines Gehäuses 60 mit einem Diffusor 61, ohne die Verwendung eines umlaufenden Aluminiumbandes 6, 25.

Innerhalb des Gehäuses 60 ist ein Rohrboden 68 gezeigt, welcher die Rohre 67 aufnimmt. Die Rohre 67 bilden dabei die Strömungskanäle im Inneren des Gehäuses 60, welche im Betrieb von einem ersten Fluid durchströmt werden und von einem zweiten Fluid umströmt werden.

Das Gehäuse 60 ist hier aus Aluminium oder einer Aluminiumlegierung gefertigt, was insgesamt das Gewicht des Wärmeübertragers 64 reduziert. Der umlaufende Rand 62 des Gehäuses 60 ist in der gezeigten Ausführungsform durch eine umlaufende Nut realisiert. In diese Nut ist der Fußbereich 63 des Diffusors 61 eingesteckt.

Der Diffusor 61 ist wie in den vorherigen Figuren aus einem Stahl, insbesondere einem Edelstahl, gefertigt.

Der Fußbereich weist eine umlaufende Stufe 65 auf, an welche sich zum Endbereich des Diffusors 61 ein senkrechter, freistehender Rand 66 anschließt. Mit diesem Rand 66 ist der Diffusor 61 in die Nut des Gehäuses 60 eingesteckt.

Der flächige Kontakt zwischen dem Gehäuse 60 und dem Diffusor 61 ist damit zwischen dem Rand 66 und der Nut des umlaufenden Randes 62 des Gehäuses gebildet. Der Diffusor 61 und das Gehäuse 60 können so mit dem elektromagnetischen Puls-Technologie Verfahren verbunden werden.

Die Figur 10 zeigt eine Anordnung eines Wärmeübertragers 54, wie er bereits in der Figur 8 gezeigt wurde, in einer Spule, welche für die Anwendung des elektromagnetischen Puls-Technologie Verfahrens verwendet wird.

Abweichend zu dem Vorgehen, welches zu Figur 4 bereits beschrieben wurde, ist in der Ausführungsform in Figur 10 kein umlaufendes Band 6, 25 vorgesehen, mit dem das Gehäuse 50 und der Diffusor 51 miteinander verbunden werden. Hier wird nun direkt ein Teil des Gehäuses 50 oder des Diffusors 51 durch das elektromagnetische Puls-Technologie Verfahren verformt, wodurch eine Verbindung des Gehäuses 50 mit dem Diffusor 51 erzeugt wird.

Analog zu dem in der Beschreibung zu Figur 4 beschriebenen Vorgehen, werden der Diffusor 51 und das Gehäuse 50 durch das elektromagnetische Puls-Verfahren miteinander im Bereich ihres flächigen Kontaktes verbunden. Die Spulenanordnung 70 umfasst dazu die Stoßstelle 55. Um möglichst geringe Spaltbreiten zwischen der Spulenanordnung 70, dem eingebrachten Diffusor 51 und Gehäuse 50 zu realisieren, muss die Spule auf die einzubringende Werkstückgeometrie angepasst werden.

Für weitere Details zur Ausführung des elektromagnetischen Puls-Technologie Verfahrens wird auf die Figurenbeschreibung zur Figur 4 verwiesen.

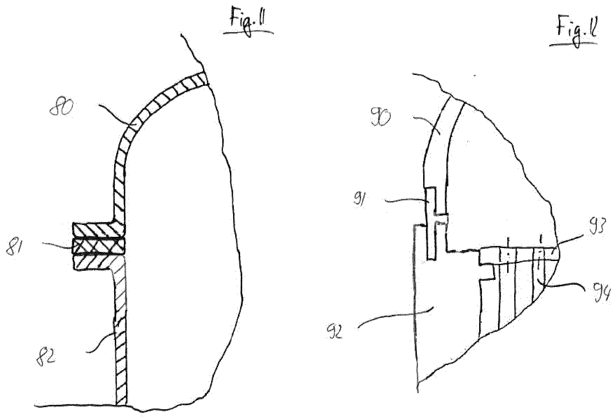

Die Fig. 11 zeigt eine alternative Ausführungsform eines Wärmeübertragers. Dabei entspricht der Diffusor 80 dem in Fig. 8 gezeigten Diffusor 51 und das Gehäuse 82 dem Gehäuse 50 der Fig. 8. Im Unterschied zur Fig. 8 ist in Fig. 11 zwischen den radial verlaufenden Randbereich des Diffusors 80 und den radial umlaufenden Randbereich des Gehäuses 82 ein Anschlusselement 81 angeordnet. Dieses Anschlusselement 81 ist aus einem Aluminiumwerkstoff gefertigt und ist vollständig umlaufend ausgebildet. Es bildet praktisch eine Zwischenschicht zwischen dem Diffusor 80 und dem Gehäuse 82 aus.

Das Anschlusselement 81 ist dabei vorzugsweise über ein elektromagnetisches Puls-Technologie Verfahren an den aus Stahl gefertigten Diffusor 80 angebunden. Der stoffliche Kontakt zwischen dem Anschlusselement 81 und dem Gehäuse 82 wird über ein Metallschutzgas-Schweißverfahren hergestellt. Zwischen dem Anschlusselement 81 und dem Gehäuse 82 herrscht ein Aluminium-Aluminium Kontakt vor.

Die Fig. 12 zeigt eine alternative Ausführung eines Wärmeübertragers. Der grundsätzliche Aufbau entspricht dabei dem Aufbau des Wärmeübertragers 64 der Fig. 9.

Die Stoßstelle zwischen dem Diffusor 90 und dem Gehäuse 92 ist abweichend gestaltet. Der Fußbereich 63 des Diffusors 90 ist nicht direkt in den Aufnahmebereich des Gehäuses 92 eingesteckt, sondern mit einem Anschlusselement 91 verbunden. Das Anschlusselement 91 ist dabei T-förmig ausgebildet und ist derart an den Fußbereich des Diffusors 90 angebracht, dass es den Diffusor 90 nach unten hin vollständig abschließt. Der Diffusor 90 sitzt mit seinem unteren Randbereich auf dem durch einen der Schenkel des T-förmigen Anschlusselementes gebildeten Absatz auf.

Das Anschlusselement 91 ist in den Aufnahmebereich des Gehäuses 92 aufgenommen. Auf diese Weise wird erreicht, dass zwischen dem Anschlusselement 91 und dem Diffusor 90 ein Stahl-Aluminium Kontakt entsteht und zwischen dem Anschlusselement 91 und dem Gehäuse 92 ein Aluminium-Aluminium Kontakt entsteht. Wie bereits in Fig. 11 beschrieben, kann die Verbindung zwischen Diffusor 90 und Anschlusselement 91 bevorzugt über ein elektromagnetisches Puls-Technologie Verfahren erzeugt werden, während die Verbindung zwischen dem Gehäuse 92 und dem Anschlusselement 91 bevorzugt durch ein Metallschutzgas-Schweißverfahren erzeugt wird.

Das Vorsehen eines Anschlusselementes 81, 91 als Zwischenstück ist insbesondere vorteilhaft, da die schwieriger zu erzeugende Verbindung zwischen Stahl und Aluminium bereits im Vorfeld der Montage in einem gesonderten Prozess stattfinden kann, und in der Serienfertigung letztlich nur das leicht zu bedienende und einfacher zu beherrschende Metallschutzgas-Schweißverfahren zur Vervollständigung des Wärmeübertragers verwendet werden muss.

Die Fig. 12 weist weiterhin eine Mehrzahl von Rohren 94 auf, welche im Inneren des Wärmeübertragers in Rohrböden 93 aufgenommen sind.

Von den beschriebenen Ausführungsbeispielen geht keine beschränkende Wirkung aus. Sie dienen zur Verdeutlichung des Erfindungsgedankens.

## Patentansprüche

1. Wärmeübertrager (1, 21, 44, 54, 64) zur Kühlung von Abgasen eines Verbrennungsmotors, mit einer Vielzahl von ein erstes Fluid führenden Rohren (8, 28), welche in ihren Endbereichen in Rohrböden (27, 68) aufgenommen sind, mit einem Gehäuse (2, 26, 42, 50, 60, 82, 92), welches die Rohre (8, 28, 67, 94) umgibt, wobei das Gehäuse (2, 26, 42, 50, 60, 82, 92) von einem zweiten Fluid durchströmbar ist und die Rohre (8, 28, 67, 94) von dem zweiten Fluid umströmbar sind, wobei die Rohrböden (27, 68, 93) so in dem Gehäuse (2, 26, 42, 50, 60, 82, 92) eingesetzt sind, dass ein erster das erste Fluid führender Kanal von einem zweiten das zweite Fluid führenden Kanal abgedichtet ist, wobei das Gehäuse (2, 26, 42, 50, 60, 82, 92) an zumindest einem seiner Endbereiche einen umlaufenden Rand (32, 52, 62) aufweist, in welchen ein Diffusor (7, 20, 40, 51, 61, 80, 90) eingesteckt oder aufgesetzt ist, wobei das Gehäuse (2, 26, 42, 50, 60, 82, 92) aus Aluminium oder einer Aluminiumlegierung gefertigt ist und der erste Diffusor (7, 20, 40, 51, 61, 80, 90) aus Stahl gefertigt ist, **dadurch gekennzeichnet, dass** zur fluiddichten und stoffschlüssigen Verbindung des Gehäuses (2, 26, 42, 50, 60) und des Diffusors (7, 20, 40, 51, 61) ein elektromagnetisches Puls-Technologie Verfahren eingesetzt ist.

2. Wärmeübertrager nach Anspruch 1, **dadurch gekennzeichnet, dass** einer der axialen Endbereiche des Diffusors (80, 90) durch ein aus Aluminium gefertigtes umlaufendes Anschlusselement (81, 91) gebildet ist, wobei der Diffusor (80, 90) mit dem durch das Anschlusselement (81, 91) gebildeten Endbereich in oder auf den umlaufenden Rand des Gehäuses (82, 92) einsteckbar oder aufsetzbar ist.

3. Wärmeübertrager nach Anspruch 2, **dadurch gekennzeichnet, dass** die Kontaktfläche zwischen dem Diffusor (80, 90) und dem Gehäuse (82, 92) vollständig durch das am Diffusor (80, 90) angebrachte Anschlusselement (81, 91) gebildet ist.

4. Wärmeübertrager nach Anspruch 2 oder 3, **dadurch gekennzeichnet, dass** das Anschlusselement (81, 91) eine radial und/oder axial verlaufende flächige Erstreckung aufweist, welche als Kontaktfläche zur Befestigung des Anschlusselementes (81, 91) am Gehäuse (82, 92) dient.

5. Verfahren zur Herstellung eines Wärmeübertragers nach einem der Ansprüche 2 bis 4, wobei die folgenden Schritte ausgeführt werden:
▪ Herstellen des Kerns eines Wärmeübertragers, aus Rohren (94), Rohrböden (93), sowie einem Gehäuse (82, 92), welches an den Endbereichen jeweils einen umlaufenden Rand aufweist.
▪ Positionieren eines aus Aluminium gefertigten Anschlusselementes (81, 91) an einem Randbereich eines aus Stahl gefertigten Diffusors (80, 90).
▪ Einbringen des Diffusors (80, 90) und des Anschlusselementes (81, 91) in eine an die Werkstückgeometrie angepasste Spulenanordnung.
▪ Dauerhafte Verbindung des aus Stahl gefertigten Diffusors (80, 90) mit dem aus Aluminium gefertigten Anschlusselement (81, 91) mittels eines elektromagnetischen Puls-Technologie Verfahrens.
▪ Einstecken oder Aufsetzen des Anschlusselementes (81, 91) des Diffusors (80, 90) in oder auf den umlaufenden Rand eines Endbereiches des Gehäuses (82, 92).
▪ Dauerhafte Verbindung des Anschlusselementes (81, 91) mit dem Gehäuse (82, 92) unter Verwendung eines Metallschutzgas-Schweißverfahrens.

6. Verfahren nach Anspruch 5, **dadurch gekennzeichnet, dass** zwischen dem Diffusor (80, 90) und dem Anschlusselement (81, 91) ein Stahl-Aluminium Kontakt besteht und zwischen dem Anschlusselement (81, 91) und dem Gehäuse (82, 92) ein Aluminium-Aluminium Kontakt besteht.

7. Wärmeübertrager (1, 21, 44, 54, 64) nach einem der vorhergehenden Ansprüche 1-4, **dadurch gekennzeichnet, dass** der Diffusor (7, 20, 40, 51, 61) einen Endbereich aufweist, welcher in den umlaufenden Rand (32, 52, 62) des Gehäuses (2, 26, 42, 50, 60) einsteckbar oder auf diesen aufsetzbar ist, wodurch zwischen Gehäuse (2, 26, 42, 50, 60) und Diffusor (7, 20, 40, 51, 61) ein flächiger Kontakt entsteht.

8. Wärmeübertrager (1, 21, 44, 54, 64) nach Anspruch 7, **dadurch gekennzeichnet, dass** sich an den flächigen Kontakt des Diffusors (7, 20, 40, 51, 61) eine Verjüngung (4, 33) anschließt, die in einen Anschlussflansch (3, 22) mündet.

9. Wärmeübertrager (1, 21, 44, 54, 64) nach einem der vorhergehenden Ansprüche 1-4, 7 und 8, **dadurch gekennzeichnet, dass** durch die Rohre (8, 28, 67) ein gasförmiges Fluid, insbesondere Abgas eines Verbrennungsmotors, strömbar ist und durch das Gehäuse (2, 26, 42, 50, 60) ein flüssiges Fluid, insbesondere eine Kühlflüssigkeit, strömbar ist.

10. Verfahren zur Herstellung eines Wärmeübertragers (54, 64) nach einem der vorhergehenden Ansprüche 7-9, wobei die folgenden Schritte ausgeführt werden:
▪ Herstellen des Kerns eines Wärmeübertragers (54, 64) aus Rohren (67), Rohrböden (68) sowie einem Gehäuse (50, 60), welches an den Endbereichen jeweils einen umlaufenden Rand (52, 62) aufweist.
▪ Einstecken oder Aufsetzen eines Diffusors (51, 61) in oder auf den umlaufenden Rand (52, 62) eines Endbereiches des Gehäuses (50, 60).
▪ Einbringen der ineinandergesteckten oder aufeinandergesetzten Elemente in eine an die Werkstückgeometrie angepasste Spulenanordnung (70).
▪ Dauerhafte Verbindung des Gehäuses (50, 60) und des Diffusors (51, 61) unter Verwendung eines elektromagnetischen Puls-Technologie Verfahrens.

11. Verfahren nach Anspruch 10, **dadurch gekennzeichnet, dass** zwischen dem Diffusor (51, 61) und dem Gehäuse (50, 60) ein Stahl-Aluminium Kontakt besteht.

12. Wärmeübertrager (1, 21, 44) nach einem der Ansprüche 1-4 und 7-9, **dadurch gekennzeichnet, dass** die Stoßstelle (34) zwischen dem Diffusor (7, 20, 40) und dem Gehäuse (2, 26, 42) von einem umlaufenden Band (6, 25, 41) umfasst ist, welches aus Aluminium oder einer Aluminiumlegierung besteht.

13. Wärmeübertrager (1, 21, 44) nach Anspruch 12, **dadurch gekennzeichnet, dass** der Diffusor (7, 20, 40) einen Endbereich aufweist, welcher in den umlaufenden Rand (32) des Gehäuses (2, 26, 42) einsteckbar ist, worauf am Diffusor (7, 20, 40) eine umlaufende Stufe (31) folgt, deren Außenkontur bündig mit der Außenkontur des umlaufenden Rands (32) des Gehäuses (2, 26, 42) abschließt.

14. Verfahren zur Herstellung eines Wärmeübertragers (1, 21, 44) nach Anspruch 12 oder 13, wobei die folgenden Schritte ausgeführt werden:
▪ Herstellen des Kerns eines Wärmeübertragers (1, 21, 44) aus Rohren (8, 28), Rohrböden (27) sowie einem Gehäuse (2, 26, 42), welches an den Endbereichen jeweils einen umlaufenden Rand (32) aufweist.
▪ Einstecken eines Diffusors (7, 20, 40) in den umlaufenden Rand (32) eines Endbereiches des Gehäuses (2, 26, 42).
▪ Umfassen der Stoßstelle (34) zwischen Diffusor (7, 20) und Gehäuse (2, 26, 42) mit dem umlaufenden Band (6, 25, 41).
▪ Einbringen der ineinandergesteckten Elemente und des um die Stoßstelle (34) umlaufenden Bandes (6, 25, 41) in eine an die Werkstückgeometrie angepasste Spulenanordnung (29).
▪ Dauerhafte Verbindung des Gehäuses (2, 26, 42) und des Diffusors (7, 20, 40) durch das umlaufende Band (6, 25, 41) unter Verwendung eines elektromagnetischen Puls-Technologie Verfahrens.

15. Verfahren nach Anspruch 14, **dadurch gekennzeichnet, dass** zwischen dem Gehäuse (2, 26, 42) und dem umlaufenden Band (6, 25, 41) ein Aluminium-Aluminium Kontakt besteht und zwischen dem Diffusor (7, 20, 40) und dem Gehäuse (2, 26, 42), sowie dem Diffusor (7, 20, 40) und dem umlaufenden Band (6, 25, 41) ein Stahl-Aluminium Kontakt besteht.

16. Verfahren nach einem der vorhergehenden Ansprüche 5, 6, 10, 11, 14 oder 15, **dadurch gekennzeichnet, dass** durch das elektromagnetische Puls-Technologie Verfahren eine fluiddichte und stoffschlüssige Verbindung auch zwischen dem Anschlusselement (81, 91) und dem Diffusor (80, 90) geschaffen wird.

17. Verfahren nach einem der vorhergehenden Ansprüche 5, 6, 10, 11, 14, 15 oder 16, **dadurch gekennzeichnet, dass** zwischen den ineinandergesteckten oder aufeinandergesetzten Elementen und der an die Werkstückgeometrie angepassten Spulenanordnung (29, 70) ein sehr kleiner, vorzugweise im Bereich von wenigen Millimetern liegender Spalt existiert.

## Claims

1. A heat exchanger (1, 21, 44, 54, 64) for cooling exhaust gas of an internal combustion engine, with a plurality of tubes (8, 28) carrying a first fluid, the end regions of the tubes being received in tube bottoms (27, 68), with a housing (2, 26, 42, 50, 60, 82, 92) which surrounds the tubes (8, 28, 67, 94), wherein a second fluid can flow through the housing (2, 26, 42, 50, 60, 82, 92) and the second fluid can flow around the tubes (8, 28, 67, 94), wherein the tube bottoms (27, 68, 93) are inserted into the housing (2, 26, 42, 50, 60, 82, 92) in such a way that a first channel carrying the first fluid is sealed off from a second channel carrying the second fluid, wherein the housing (2, 26, 42, 50, 60, 82, 92) has, on at least one of its end regions, a circumferential edge (32, 52, 62) into or onto which a diffuser (7, 20, 40, 51, 61, 80, 90) is inserted or fitted, wherein the housing (2, 26, 42, 50, 60, 82, 92) is made of aluminium or an aluminium alloy and the first diffuser (7, 20, 40, 51, 61, 80, 90) is made of steel, **characterised in that** an electromagnetic pulse technology method is used for the fluid-tight and firmly bonded connection of the housing (2, 26, 42, 50, 60) and the diffuser (7, 20, 40, 51, 61).

2. The heat exchanger according to claim 1, **characterised in that** one of the axial end regions of the diffuser (80, 90) is formed by a circumferential connecting element (81, 91) made of aluminium, wherein the end region of the diffuser (80, 90) formed by the connecting element (81, 91) can be inserted into or fitted onto the circumferential edge of the housing (82, 92).

3. The heat exchanger according to claim 2, **characterised in that** the contact surface between the diffuser (80, 90) and the housing (82, 92) is completely formed by the connecting element (81, 91) attached to the diffuser (80, 90).

4. The heat exchanger according to claim 2 or 3, **characterised in that** the connecting element (81, 91) has a radially and/or axially running flat extension which serves as a contact surface in order to fix the connecting element (81, 91) to the housing (82, 92).

5. A method for producing a heat exchanger according to one of claims 2 to 4, wherein the following steps are performed:
▪ Producing the core of a heat exchanger of tubes (94), tube bottoms (93) and a housing (82, 92) which has a respective circumferential edge on the end regions.
▪ Positioning a connecting element (81, 91) made of aluminium on an edge region of a diffuser (80, 90) made of steel.
▪ Introducing the diffuser (80, 90) and the connecting element (81, 91) into a coil arrangement adapted to the geometry of the workpiece.
▪ Permanent connection of the diffuser (80, 90) made of steel and the connecting element (81, 91) made of aluminium by means of an electromagnetic pulse technology method.
▪ Inserting or fitting the connecting element (81, 91) of the diffuser (80, 90) into or onto the circumferential edge of an end region of the housing (82, 92).
▪ Permanent connection of the connecting element (81, 91) to the housing (82, 92) using a gas-shielded metal-arc welding method.

6. The method according to claim 5, **characterised in that** there is a steel-aluminium contact between the diffuser (80, 90) and the connecting element (81, 91) and there is an aluminium-aluminium contact between the connecting element (81, 91) and the housing (82, 92) .

7. The heat exchanger (1, 21, 44, 54, 64) according to one of the preceding claims 1-4, **characterised in that** the diffuser (7, 20, 40, 51, 61) has an end region which can be inserted into or fitted onto the circumferential edge (32, 52, 62) of the housing (2, 26, 42, 50, 60), whereby a flat contact is created between the housing (2, 26, 42, 50, 60) and the diffuser (7, 20, 40, 51, 61).

8. The heat exchanger (1, 21, 44, 54, 64) according to claim 7, **characterised in that** the flat contact of the diffuser (7, 20, 40, 51, 61) is followed by a tapering (4, 33) which ends in a connecting flange (3, 22).

9. The heat exchanger (1, 21, 44, 54, 64) according to one of the preceding claims 1-4, 7 and 8, **characterised in that** a gaseous fluid, in particular exhaust gas of an internal combustion engine, can flow through the tubes (8, 28, 67) and a liquid fluid, in particular a cooling liquid, can flow through the housing (2, 26, 42, 50, 60).

10. A method for producing a heat exchanger (54, 64) according to one of the preceding claims 7-9, wherein the following steps are performed:
▪ Producing the core of a heat exchanger (54, 64) of tubes (67), tube bottoms (68) and a housing (50, 60) which has a respective circumferential edge (52, 62) on the end regions.
▪ Inserting or fitting a diffuser (51, 61) into or onto the circumferential edge (52, 62) of an end region of the housing (50, 60).
▪ Introducing the elements inserted into or fitted onto each other into a coil arrangement (70) adapted to the geometry of the workpiece.
▪ Permanent connection of the housing (50, 60) and the diffuser (51, 61) using an electromagnetic pulse technology method.

11. The method according to claim 10, **characterised in that** there is a steel-aluminium contact between the diffuser (51, 61) and the housing (50, 60).

12. The heat exchanger (1, 21, 44) according to one of claims 1-4 and 7-9, **characterised in that** the joint (34) between the diffuser (7, 20, 40) and the housing (2, 26, 42) is encompassed by a circumferential strip (6, 25, 41) which consists of aluminium or an aluminium alloy.

13. The heat exchanger (1, 21, 44) according to claim 12, **characterised in that** the diffuser (7, 20, 40) has an end region which can be inserted into the circumferential edge (32) of the housing (2, 26, 42), wherein a circumferential step (31) follows on the diffuser (7, 20, 40) whose outer contour ends flush with the outer contour of the circumferential edge (32) of the housing (2, 26, 42).

14. A method for producing a heat exchanger (1, 21, 44) according to claim 12 or 13, wherein the following steps are performed:
▪ Producing the core of a heat exchanger (1, 21, 44) of tubes (8, 28), tube bottoms (27) and a housing (2, 26, 42) which has a respective circumferential edge (32) on the end regions.
▪ Inserting a diffuser (7, 20, 40) into the circumferential edge (32) of an end region of the housing (2, 26, 42).
▪ Encompassing the joint (34) between the diffuser (7, 20) and the housing (2, 26, 42) with the circumferential strip (6, 25, 41).
▪ Introducing the elements inserted into each other and the strip (6, 25, 41) encompassing the joint (34) into a coil arrangement (29) adapted to the geometry of the workpiece.
▪ Permanent connection of the housing (2, 26, 42) and the diffuser (7, 20, 40) through the circumferential strip (6, 25, 41) using an electromagnetic pulse technology method.

15. The method according to claim 14, **characterised in that** there is an aluminium-aluminium contact between the housing (2, 26, 42) and the circumferential strip (6, 25, 41) and there is a steel-aluminium contact between the diffuser (7, 20, 40) and the housing (2, 26, 42) and the diffuser (7, 20, 40) and the circumferential strip (6, 25, 41).

16. The method according to one of the preceding claims 5, 6, 10, 11, 14 or 15, **characterised in that** a fluid-tight and firmly bonded connection also between the connecting element (81, 91) and the diffuser (80, 90) is created through the electromagnetic pulse technology method.

17. The method according to one of the preceding claims 5, 6, 10, 11, 14, 15 or 16, **characterised in that** there is a very small gap, preferably in the range of few millimetres, between the elements inserted into or fitted onto each other and the coil arrangement (29, 70) adapted to the geometry of the workpiece.

## Revendications

1. Echangeur de chaleur (1, 21, 44, 54, 64) servant au refroidissement de gaz d'échappement d'un moteur à combustion interne, échangeur de chaleur comprenant une multiplicité de tubes (8, 28) guidant un premier fluide, tubes qui, dans leurs zones d'extrémités, sont logés dans des plateaux à tubes (27, 68), comprenant un carter (2, 26, 42, 50, 60, 82, 92) qui entoure les tubes (8, 28, 67, 94), où le carter (2, 26, 42, 50, 60, 82, 92) peut être traversé par un second fluide, et les tubes (8, 28, 67, 94) peuvent être contournés par le second fluide, où les plateaux à tubes (27, 68, 93) sont introduits dans le carter (2, 26, 42, 50, 60, 82, 92) de manière telle, qu'un premier conduit guidant le premier fluide est rendu étanche par un deuxième conduit guidant le second fluide, où le carter (2, 26, 42, 50, 60, 82, 92) présente, au niveau au moins de l'une des ses zones d'extrémités, un bord périphérique (32, 52, 62) dans lequel est emboîté ou placé un diffuseur (7, 20, 40, 51, 61, 80, 90), où le carter (2, 26, 42, 50, 60, 82, 92) est fabriqué en aluminium ou dans un alliage d'aluminium, et le premier diffuseur (7, 20, 40, 51, 61, 80, 90) est fabriqué en acier, **caractérisé en ce que** l'on utilise un procédé de technologie par impulsion électromagnétique pour l'assemblage du carter (2, 26, 42, 50, 60) et du diffuseur (7, 20, 40, 51, 61), ledit assemblage étant étanche aux fluides et obtenu par continuité de matière.

2. Echangeur de chaleur selon la revendication 1, **caractérisé en ce que** l'une des zones d'extrémités axiales du diffuseur (80, 90) est formée par un élément de raccordement (81, 91) périphérique fabriqué en aluminium, où le diffuseur (80, 90), avec la zone d'extrémité formée par l'élément de raccordement (81, 91), peut être emboîté dans le bord périphérique du carter (82, 92), ou bien placé sur ledit bord périphérique.

3. Echangeur de chaleur selon la revendication 2, **caractérisé en ce que** la surface de contact comprise entre le diffuseur (80, 90) et le carter (82, 92) est formée en totalité par l'élément de raccordement (81, 91) fixé sur le diffuseur (80, 90).

4. Echangeur de chaleur selon la revendication 2 ou 3, **caractérisé en ce que** l'élément de raccordement (81, 91) présente une étendue de surface se profilant dans le sens radial et / ou axial, étendue qui sert de surface de contact pour la fixation de l'élément de raccordement (81, 91) sur le carter (82, 92).

5. Procédé de fabrication d'un échangeur de chaleur selon l'une quelconque des revendications 2 à 4, où sont exécutées les étapes suivantes consistant :
▪ à fabriquer le coeur d'un échangeur de chaleur se composant de tubes (94), de plateaux à tubes (93) ainsi que d'un carter (82, 92) qui présente à chaque fois un bord périphérique situé au niveau des zones d'extrémités.
▪ à positionner, sur une zone de bordure d'un diffuseur (80, 90) fabriqué en acier, un élément de raccordement (81, 91) fabriqué en aluminium.
▪ à insérer le diffuseur (80, 90) et l'élément de raccordement (81, 91) dans un agencement de bobines adapté à la géométrie des pièces d'usinage.
▪ à réaliser un assemblage permanent du diffuseur (80, 90) fabriqué en acier, avec l'élément de raccordement (81, 91) fabriqué en aluminium, ledit assemblage étant réalisé au moyen d'un procédé de technologie par impulsion électromagnétique.
▪ à emboîter l'élément de raccordement (81, 91) du diffuseur (80, 90) dans le bord périphérique d'une zone d'extrémité du carter (82, 92), ou bien à placer ledit élément de raccordement sur ledit bord périphérique.
▪ à réaliser un assemblage permanent de l'élément de raccordement (81, 91), avec le carter (82, 92), ledit assemblage étant réalisé en utilisant un procédé de soudage de métaux avec un gaz de protection.

6. Procédé selon la revendication 5, **caractérisé en ce qu'**il y a un contact aluminium contre acier entre le diffuseur (80, 90) et l'élément de raccordement (81, 91), et qu'il y a un contact aluminium contre aluminium entre l'élément de raccordement (81, 91) et le carter (82, 92).

7. Echangeur de chaleur (1, 21, 44, 54, 64) selon l'une quelconque des revendications précédentes 1 à 4, **caractérisé en ce que** le diffuseur (7, 20, 40, 51, 61) présente une zone d'extrémité qui peut être emboîtée dans le bord périphérique (32, 52, 62) du carter (2, 26, 42, 50, 60) ou qui peut être placée sur ledit bord périphérique, grâce à quoi il se produit un contact de surface entre le carter (2, 26, 42, 50, 60) et le diffuseur (7, 20, 40, 51, 61).

8. Echangeur de chaleur (1, 21, 44, 54, 64) selon la revendication 7, **caractérisé en ce qu'**un rétrécissement (4, 33) fait suite au contact de surface du diffuseur (7, 20, 40, 51, 61), rétrécissement qui débouche dans une bride de raccordement (3, 22).

9. Echangeur de chaleur (1, 21, 44, 54, 64) selon l'une quelconque des revendications précédentes 1 à 4, 7 et 8, **caractérisé en ce qu'**un fluide gazeux, en particulier un gaz d'échappement d'un moteur à combustion interne, peut s'écouler en traversant les tubes (8, 28, 67), et un fluide liquide, en particulier un liquide de refroidissement, peut s'écouler en traversant le carter (2, 26, 42, 50, 60) .

10. Procédé de fabrication d'un échangeur de chaleur (54, 64) selon l'une quelconque des revendications précédentes 7 à 9, où sont exécutées les étapes suivantes consistant :
▪ à fabriquer le coeur d'un échangeur de chaleur (54, 64) se composant de tubes (67), de plateaux à tubes (68) ainsi que d'un carter (50, 60) qui présente à chaque fois un bord périphérique (52, 62) situé au niveau des zones d'extrémités.
▪ à emboîter un diffuseur (51, 61) dans le bord périphérique (52, 62) d'une zone d'extrémité du carter (50, 60), ou bien à placer ledit diffuseur sur ledit bord périphérique.
▪ à insérer les éléments emboîtés les uns dans les autres ou placés les uns au-dessus des autres, dans un agencement de bobines (70) adapté à la géométrie des pièces d'usinage.
▪ à réaliser un assemblage permanent du boîtier (50, 60) et du diffuseur (51, 61), en utilisant un procédé de technologie par impulsion électromagnétique.

11. Procédé selon la revendication 10, **caractérisé en ce qu'**il y a un contact aluminium contre acier entre le diffuseur (51, 61) et le carter (50, 60).

12. Echangeur de chaleur (1, 21, 44) selon l'une quelconque des revendications 1 à 4 et 7 à 9, **caractérisé en ce que** le point de jonction (34) situé entre le diffuseur (7, 20, 40) et le carter (2, 26, 42) est entouré par une bande périphérique (6, 25, 41) qui se compose d'aluminium ou d'un alliage d'aluminium.

13. Echangeur de chaleur (1, 21, 44) selon la revendication 12, **caractérisé en ce que** le diffuseur (7, 20, 40) présente une zone d'extrémité qui peut être emboîtée dans le bord périphérique (32) du carter (2, 26, 42), après quoi il s'ensuit, formé sur le diffuseur (7, 20, 40), un étage périphérique (31) dont le contour extérieur se termine en étant à fleur du contour extérieur du bord périphérique (32) du carter (2, 26, 42).

14. Procédé de fabrication d'un échangeur de chaleur (1, 21, 44) selon la revendication 12 ou 13, où sont exécutées les étapes suivantes consistant :
▪ à fabriquer le coeur d'un échangeur de chaleur (1, 21, 44) se composant de tubes (8, 28), de plateaux à tubes (27) ainsi que d'un carter (2, 26, 42) qui présente à chaque fois un bord périphérique (32) situé au niveau des zones d'extrémités.
▪ à emboîter un diffuseur (7, 20, 40) dans le bord périphérique (32) d'une zone d'extrémité du carter (2, 26, 42) .
▪ à entourer, avec la bande périphérique (6, 25, 41), le point de jonction (34) situé entre le diffuseur (7, 20) et le carter (2, 26, 42).
▪ à insérer les éléments emboîtés les uns dans les autres et la bande périphérique (6, 25, 41) entourant le point de jonction (34), dans un agencement de bobines (29) adapté à la géométrie des pièces d'usinage.
▪ à réaliser un assemblage permanent du carter (2, 26, 42) et du diffuseur (7, 20, 40) grâce à la bande périphérique (6, 25, 41), en utilisant un procédé de technologie par impulsion électromagnétique.

15. Procédé selon la revendication 14, **caractérisé en ce qu'**il y a un contact aluminium contre aluminium, entre le carter (2, 26, 42) et la bande périphérique (6, 25, 41), et qu'il y a un contact aluminium contre acier, entre le diffuseur (7, 20, 40) et le carter (2, 26, 42), ainsi qu'entre le diffuseur (7, 20, 40) et la bande périphérique (6, 25, 41).

16. Procédé selon l'une quelconque des revendications précédentes 5, 6, 10, 11, 14 ou 15, **caractérisé en ce que** l'on réalise, grâce au procédé de technologie par impulsion électromagnétique, un assemblage étanche aux fluides et obtenu par continuité de matière, entre l'élément de raccordement (81, 91) et le diffuseur (80, 90).

17. Procédé selon l'une quelconque des revendications précédentes 5, 6, 10, 11, 14, 15 ou 16, **caractérisé en ce qu'**il existe une très petite fente qui se situe de préférence dans la plage égale à quelques millimètres, entre les éléments emboîtés les uns dans les autres ou placés les uns au-dessus des autres, et l'agencement de bobines (29, 70) adapté à la géométrie des pièces d'usinage.
